# EUROPEAN PATENT SPECIFICATION

(11) **EP 1 750 285 B1**
(45) Date of publication and mention of the grant of the patent: **09.02.2011**
(21) Application number: 06253947.3
(22) Date of filing: 27.07.2006
(51) Int. Cl.: G21C 17/022, G21C 19/307

(54) **Method of manufacture of noble metal/zinc oxide hybrid product for simultaneous dose reduction and mitigation of Stress Corrosion Cracking (SCC) of nuclear power plants**
Verfahren zur Herstellung eines hybriden Edelmetall/Zinkoxid-Produktes zur gleichzeitigen Reduzierung der Dosis und Verminderung von Spannungskorrosion von Kernkraftwerken
Procédé de préparation d'un produit hybride métal noble/oxyde de zinc pour la réduction de dose et l'atténuation simultanée de la corrosion sous contraintes de centrales nucléaires

(30) Priority: 03.08.2005 US 195592
(43) Date of publication of application: 07.02.2007
(73) Proprietor: GENERAL ELECTRIC COMPANY, Schenectady, NY 12345 (US)
(72) Inventor: Hettiarachchi, Samson, Menlo, CA 94052 (US); Gonzaga, Angelito Foz, San Jose, CA 95148 (US); Diaz, Thomas Pompillio, San Martin, CA 95046 (US)
(74) Representative: Szary, Anne Catherine

(56) References cited:
- JP-A- 10 043 589
- JP-A- 2001 089 137
- JP-A- 2005 003 565
- US-A1- 2003 012 686

## Description

The present invention relates to composite particles of a zinc containing compound and a noble metal for use in nuclear power reactors. More specifically, the present invention provides a process for the preparation of composite particles of zinc oxide coated with a noble metal.

### BACKGROUND OF THE INVENTION

U.S. patents 5,448,605, 5,600,691 and 5,600,692 describe the doping of metallic surfaces with noble metals to impart catalytic properties on the surfaces. The methods described in these patents deviate significantly from the conventional methods such as electroplating and electroless plating that are commonly used to impart such catalytic properties on metal surfaces. As an example, electroplating requires the use of an externally applied voltage, whereas electroless plating requires the use of strong chemical reducing agents to deposit noble metals on surfaces. Furthermore, electroplating and electroless plating require high concentration of metal to be deposited, low or high pH and addition of other undesirable chemical species such as chlorides and sulfates. As described in the above-listed patents, deposition of noble metals can be achieved by injecting noble metal containing chemicals in to the reactor water. Previous studies have shown that the incorporation of noble metals or platinum group metals such as Palladium, Platinum, Iridium, Rhodium, etc. can be accomplished by this relatively simple treatment and they impart catalytic properties on these surfaces as shown by low ECPs and very low crack growth rates in the presence of a stoichiometric excess of hydrogen and in high temperature water. The presence of noble metal on these noble metal doped surfaces has been proven by surface analysis using Auger Spectroscopy, Atomic Absorption Spectroscopy and ESCA. Noble metal addition technology has been applied to 28 commercial BWRs worldwide and the ECP of treated surfaces remained low in the presence of low levels of hydrogen injection into feedwater after multiple years of plant operation without showing any sign of deterioration of catalytic activity. Thus, it is clear that the noble metal, once deposited by this technique, is very tenaciously bound to the internal surfaces of the BWR.

U.S. patents 4,756,874, 4,950,449, 4,759,900 and 5,896,433 describe the addition of either zinc oxide (ZnO), depleted ZnO (DZO) or Zn ions to nuclear reactor water to suppress radio nuclide build-up on out of core reactor internals surfaces. The effectiveness of Zn ions or ZnO in suppressing radioactive build-up of out of core surfaces and reducing drywell dose rates as well as lowering personnel exposure have been well demonstrated in operating nuclear reactors. DZO addition has been practiced in 43 BWRs worldwide as a means of controlling shut down dose rates arising largely from the accumulation of the undesirable isotope Cobalt-60 (Co⁶⁰) in the recirculation piping. The zinc addition results in a zinc containing spinel type oxide film on BWR internal surfaces where the zinc atoms preferentially occupy the sites that would otherwise have been occupied by Co⁶⁰.

To date, the addition of noble metals and depleted ZnO (DZO) to reactors have been performed as two distinct operations, at two different locations of the reactor, in two different ways. As an example, noble metal has been added to reactor water as a solution, while DZO has been added to feedwater as Zn ions in the form of a slurry or by allowing feedwater to flow through a bed of solid DZO pellets. Furthermore, the addition of the two species occurs at two different temperatures, in one case DZO addition to feedwater (350° to 450° F) and in the other case noble metal addition to reactor water at a much lower temperature (240° to 300° F). Moreover, noble metal addition is active (requires pumps for injection) and intermittent, while the DZO addition is passive and continuous during plant operation.

The cumulative noble metal addition experience in nuclear power plants is about 120 reactor operating years and the DZO experience is in excess of 300 reactor operating years, demonstrating that the two technologies are widely accepted by the nuclear industry. However, currently there is no single approach of adding both noble metal and DZO in to an operating plant simultaneously. The present invention seeks to address that need.

### BRIEF DESCRIPTION OF THE INVENTION

The present invention provides a unique noble metal/zinc-containing compound composite product that will enable plants to practice both technologies at the same time using a passive (no pumps) approach where operator intervention is minimal. The invention involves identifying the optimum chemistry conditions for maximum or optimum incorporation of noble metals into the zinc-containing compound, so that the micron or sub-micron size zinc-containing particles are individually coated with a noble metal(s) that are of nano-meter size distribution, such as platinum. Nano-meter size distribution of platinum is achievable because platinum is deposited on zinc oxide particles from an ionic solution of a platinum compound.

There is provided a process for preparing a composite particle as defined in claim 1.

### BRIEF DESCRIPTION OF THE DRAWINGS

The invention will now be described in greater detail, by way of example, with reference to the drawings, in which:-
FIGURE 1 is a schematic of the apparatus for introducing noble metal/zinc composite particles into the reactor water to be introduced into a reactor where noble metal can be loaded on to zinc oxide to any desired level by adjusting the noble metal solution concentration during the ZnO/noble metal solution equilibration process;
FIGURE 2 shows examples of plots from the literature of zeta potential and fraction of an oxide adhered onto a surface as a function of pH due to the oxide/surface interaction process;
Figure 3 shows actual experimental pH variation data versus time when DZO is added to water having an initial pH as indicated at time zero before DZO addition (pH of zero charge is 9.0);
Figure 4 is actual experimental pH variation data versus time when DZO is added to 50 ppb of Pt as Na₂Pt(OH)₆ solution having an initial pH as indicated by values at zero time before DZO addition (pH of zero charge is 8.63);
Figure 5 schematically shows how surface charge on DZO varies as pH changes with and without [Pt(OH)₆]⁼ anion, incorporation resulting in charge reversal of DZO;
Figure 6 shows schematically how charge reversal of DZO occurs due to incorporation of Pt onto DZO surface as [Pt(OH)₆]⁼ anion;
FIGURE 7 is a schematic showing the steps involved in the method of manufacture of the composite particles of the invention;
FIGURE 8 shows a cross-section of a composite particle of the invention; and
Figure 9 shows schematically a modification of the apparatus of Figure 1.

### DETAILED DESCRIPTION OF THE INVENTION

The present invention resides in the discovery that it is possible, by way of a composite particle containing a zinc-containing compound, typically zinc oxide or depleted zinc oxide, and a noble metal, to introduce both zinc and noble metal into a reactor while the reactor is operating, thereby obviating the need to shut-down the reactor to facilitate addition of either species. The invention provides a solution chemistry process that permits a selected surface interaction to occur between the particles and the noble metal ionic species or particles to achieve a desired loading of noble metal on the surface of the particles.

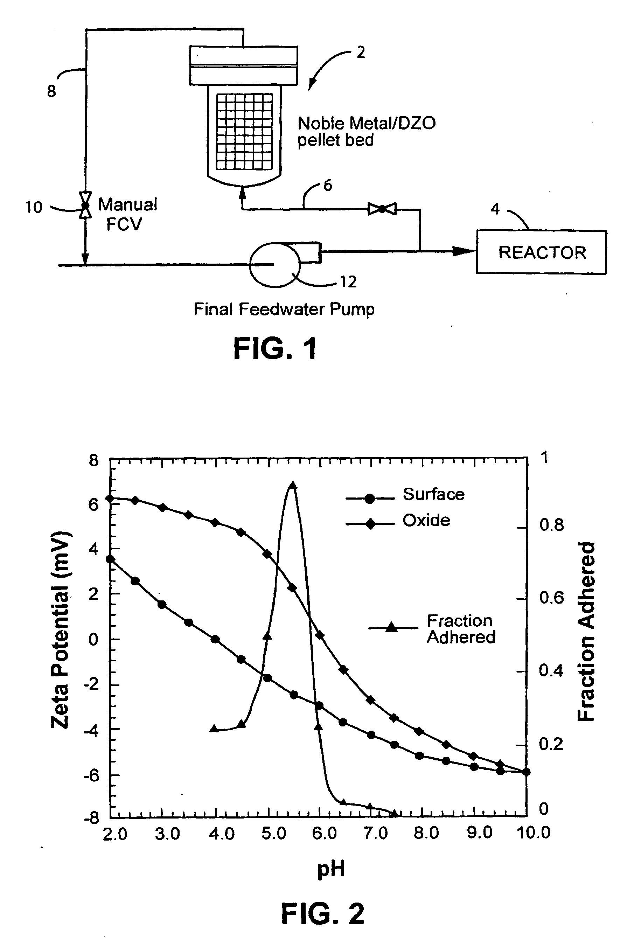

Referring to Figure 1, there is shown, schematically, an apparatus 2 for introducing composite particles into reactor water which is then fed to a reactor 4. The noble metal and zinc containing solution is automatically fed back into the feedwater through lines 6,8 by using the differential pressure of flow control valve (FCV) 10 and final feedwater pump 12. The equipment requires no power, no pumps or other mechanical devices to simultaneously inject noble metals and zinc into the reactor. Minimum operator intervention is required to manipulate the valve, to change the concentration of zinc or noble metal entering the reactor vessel, when necessary. This approach will require tailor-making the DZO/noble metal hybrid depending on the zinc demand of the reactor and its efficiency of depositing noble metal.

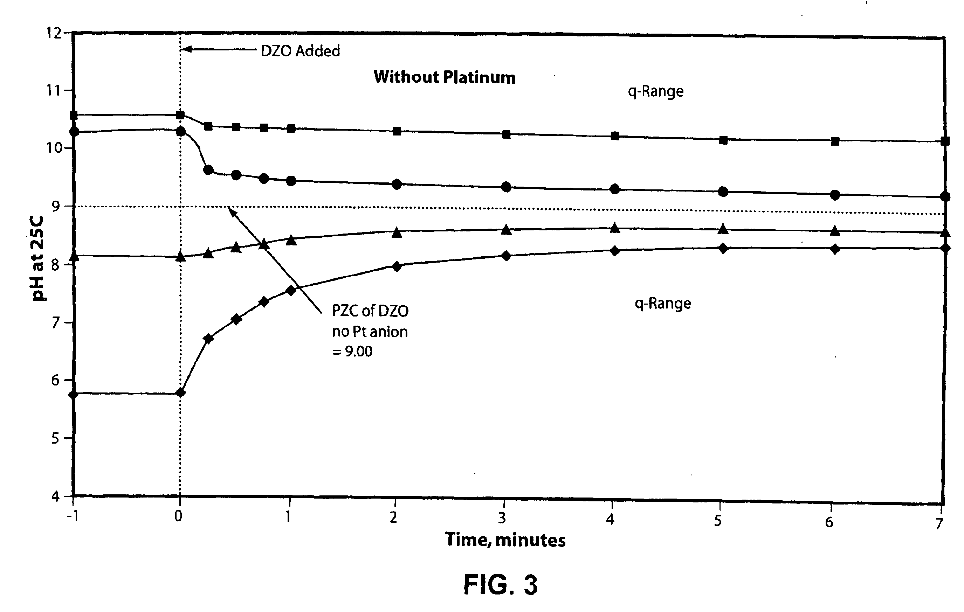

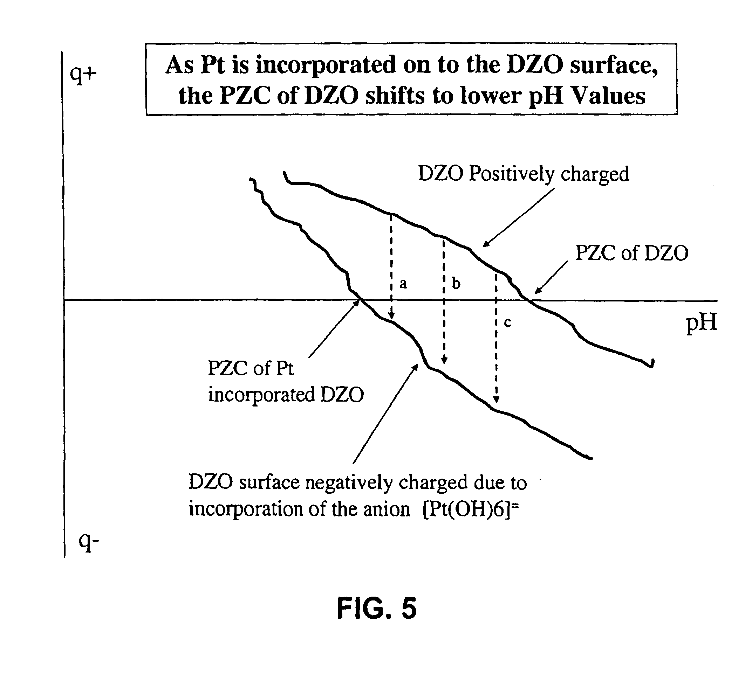

Figure 2 shows an example from the literature of surface charge effect (zeta potential and fraction of particles adhered onto a surface) as a function of pH. It will be seen that a maximum interaction occurs at a pH of between about 5 & 6. From this and from Figures 3 through 6, it will be appreciated that it is possible, in the present invention, to select a pH depending on the desired level of loading of noble metal on the DZO particle. The purpose of this Figure and Figure 5 is to illustrate that interaction between DZO and Pt can be optimized by a judicious selection of the pH during the equilibration process.

Figure 3 shows actual experimental pH data before and after the addition of depleted zinc oxide (DZO) to water. In these experiments the pH of the water was adjusted to the desired value by adding a few micro-liters of 0.1 M NaOH or 0.1 M HNO₃ to 35 ml of deionized (DI) water bubbled with Argon gas to maintain the solution free of carbon dioxide. The initial pHs of the solutions are indicated by pH values at time zero before DZO addition. The pH variation was monitored after adding 0.5 g of DZO powder while the solution was being stirred with a magnetic stirrer and bubbled with Argon gas. If the initial pHs are lower than the pH of zero charge (pzc) of DZO, an increase in pH with time occurs due to the adsorption of protons on to the DZO surface. Similarly, at higher initial pHs, a decrease in pH occurs due to the adsorption of hydroxyl ions on to the DZO surface. The pH at which no change in pH occurs is the pzc of DZO. Figure 3 shows that the pzc of DZO is 9.00.

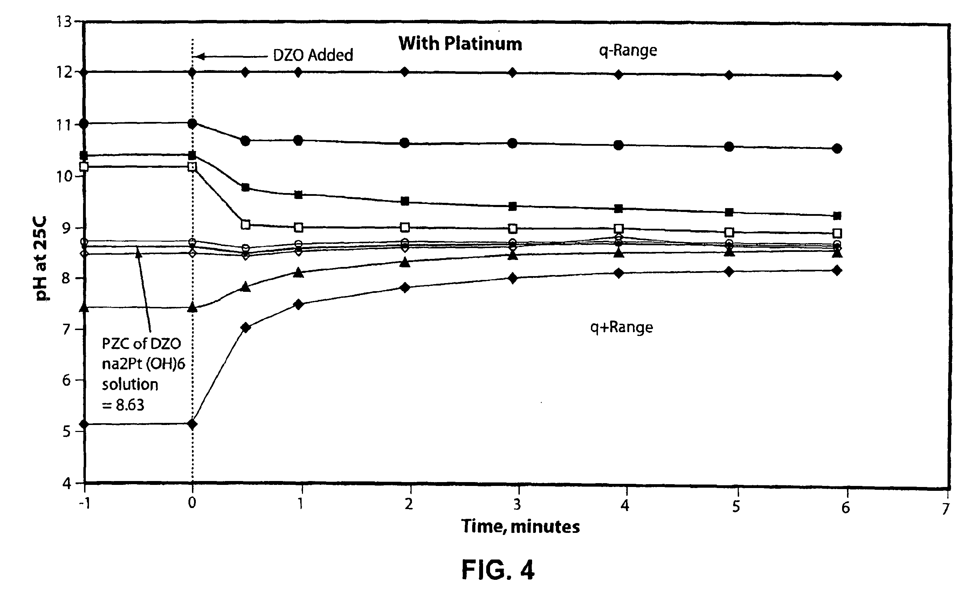

Figure 4 is similar to Figure 3, except the starting solution contains 50 ppb Pt as Na₂Pt(OH)₆. Strong interaction between positively charged DZO and the [Pt(OH)₆]⁼ anions occur at low pHs and the pzc in this case has shifted to lower values, i.e. 8.63 as shown in the Figure. The strong interaction between DZO and [Pt(OH)₆]⁼ anion at low pH was further confirmed by analyzing the filtered solution (through a 0.2 micron filter) for Pt content remaining in solution. The filtered pH 5.13 solution showed a remaining Pt concentration of 0.047 ppb, indicating that most of the Pt has interacted with DZO. The pH 12.03 solution showed a remaining Pt concentration of 19.8 ppb, and the pH change was very small down to 11.97 over a 6 minute period. The data confirmed that optimum interaction of Pt on DZO at a microscopic level occurs at low pHs, and more specifically, close to pH 5.

Figure 5 schematically shows how surface charge on DZO occurs as pH changes with and without [Pt(OH)₆]⁼ anion. The shift of pzc of DZO to lower values occur because of the strong interaction between positively charged DZO particles and the [Pt(OH)₆]⁼ anion.

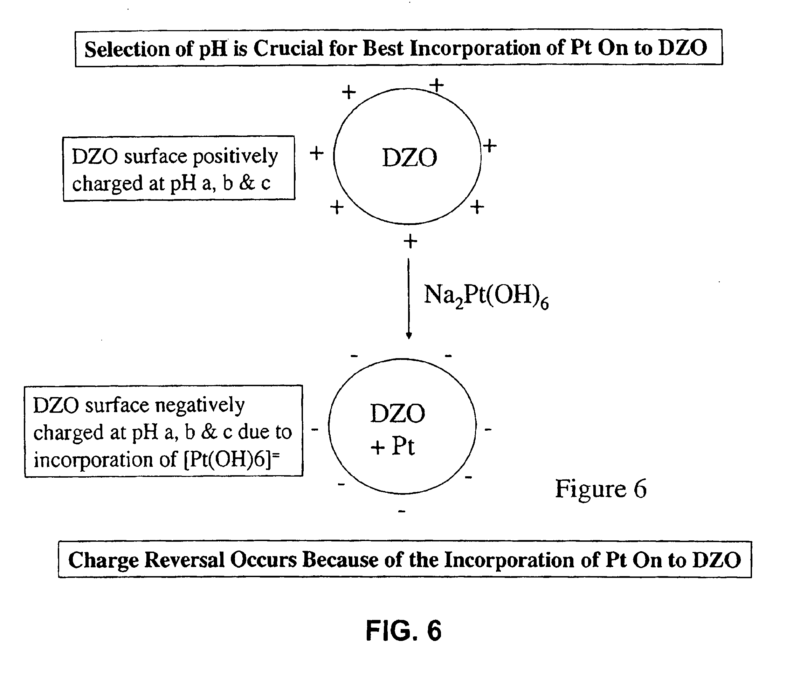

This interaction causes the charge reversal of DZO as depicted schematically in Figure 6. Since [Pt(OH)₆]⁼ anion in solution interacts strongly with each DZO particle at a microscopic level, an optimum homogeneity between DZO and Pt is obtained, which is far superior to mixing DZO powder with Pt compounds, oxides or finely divided solid Pt particles under dry mixing conditions. Besides, the choice of right pH as described in the current invention is crucial for maximum interaction between DZO and Pt as well as for obtaining maximum loading of Pt on to DZO powder.

In a typical embodiment, commercially available DZO powder having micron or submicron particle size 0.1 to 50 micron, and more specifically 1 to 10 micron is employed together with available noble metal chemicals, such as H₂Pt(OH)₆, Na₂Pt(OH)₆, Na₂Rh(NO₂)₆ or similar compounds of other noble metals. Examples of other compounds of the form MₓA_{y}, where M is a metal acceptable in a reactor water environment such as sodium, potassium, iron, nickel, titanium, zirconium, zinc, tungsten, niobium, tantalum, yttrium, platinum, palladium, osmium, iridium, ruthenium, rhodium, vanadium, chromium, manganese and the anion is a hydroxide, nitrate, nitrite or any other simple or complex anion acceptable in a nuclear reactor water environment. Alternatively, the metal (selected from any of the above listed metals) may be in an anionic form and the cation could be any of the metal ions acceptable in a nuclear reactor water environment. An example of such a compound is Na₂Pt(OH)₆.

The invention resides in the discovery that it is possible to manufacture a hybrid noble metal/zinc product by using specific chemistry conditions favorable for the formation of particles coated with noble metal to the desired levels, such that the optimum amounts of noble metal and zinc ions/particles are injected into the feedwater. It has been found according to the invention that simple mixing of noble metal solution or noble metal particles with zinc-contain particles is not adequate, since there will be no control of the amount of zinc or the noble metal entering the feedwater due to the heterogeneity of the mixture. As an example, if the feedwater zinc concentration is 0.4 ppb, the noble metal concentration could be 0.1 ppb or 5 ppb depending on the heterogeneity of the mixed compounds. Since the mix between two chemicals is macroscopically heterogeneous, individual control of the concentration of the two species would not be possible.

The composite particles of the invention may be prepared using a known quantity of the zinc oxide powder or depleted zinc oxide powder having a surface area of 1 to 100 m²/g or more specifically about 10 m²/g, and equilibrating it with pH adjusted Pt containing anion solutions such as H₂Pt(OH)₆, Na₂Pt(OH)₆ under well stirred or ultrasonicated conditions. The pH is adjusted to maintain the desired strong interaction between the positively charged DZO particles and the negatively charged Pt containing anions, such as Pt(OH)₆²⁻. According to the invention, as depicted in Figure 4 & 5, for maximum interaction, the pH is maintained in the range of 5 to 6.

Since the feedwater temperature is relatively fixed in a given power plant (typically 350 to 450°F), the solubility of the zinc oxide and hence the amount of zinc ions entering the feedwater is also fixed depending on the operating feedwater temperature, since feedwater is used as the carrier for zinc ions. The approach to control zinc concentration in the feedwater stream for a given loading of the pellet bed is to change the flow through the latter by using the flow control valve (FCV) 6 shown in Figure 1. However, this will also increase the noble metal input into the reactor. Thus, depending on the zinc concentration needed, noble metal is loaded to different amounts on the zinc oxide particles by equilibrating mixture at the appropriate pH. As an example, if the highest loading of noble metal is needed, the pH of the suspension will be maintained at the pH of highest interaction or adhesion, i.e. at a pH of about 5.5 before making the pellets. If less noble metal loading is required, the pH is selected to have less interaction, for example a pH of higher than 5.5 depending the noble metal loading needed. According to an embodiment which does not form part of the present invention, if very low noble metal loading is required, the pH is maintained in a region of very low interaction, i.e. a pH > 9.0 the pzc of DZO. Thus, the composite particles of the invention can be tailor-made to have the desired noble metal loading and the zinc input into the feedwater.

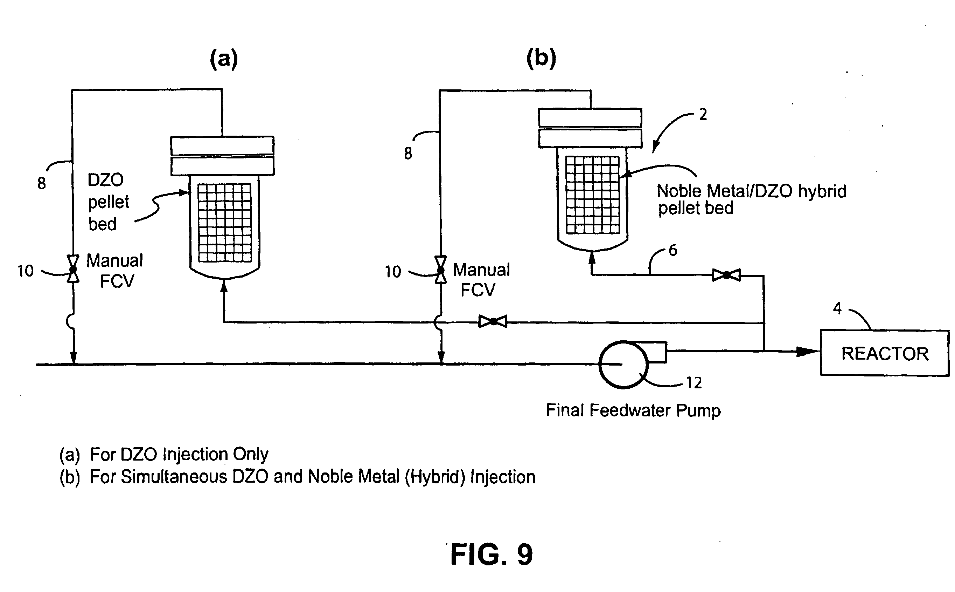

An alternate method is to employ the highest noble metal loaded zinc oxide or depleted zinc oxide bed in parallel with just a zinc oxide/depleted zinc oxide bed with a separate flow control valve as shown Figure 9. This allows an independent control of zinc concentration and noble metal into the feedwater depending on the flow through each individual bed. Any flow through just the depleted zinc oxide bed lowers the concentration input of noble metal into the feedwater.

Once the maximum interaction between noble metal anion and the zinc-containing particles is achieved (Figures 4 & 5) as determined by the surface charge of zinc-containing particles, the steady state concentration of Pt content in the solution signals the completion of the interaction process. The mixture is filtered, ultracentrifuged or dried to separate the composite particles doped with noble metal.

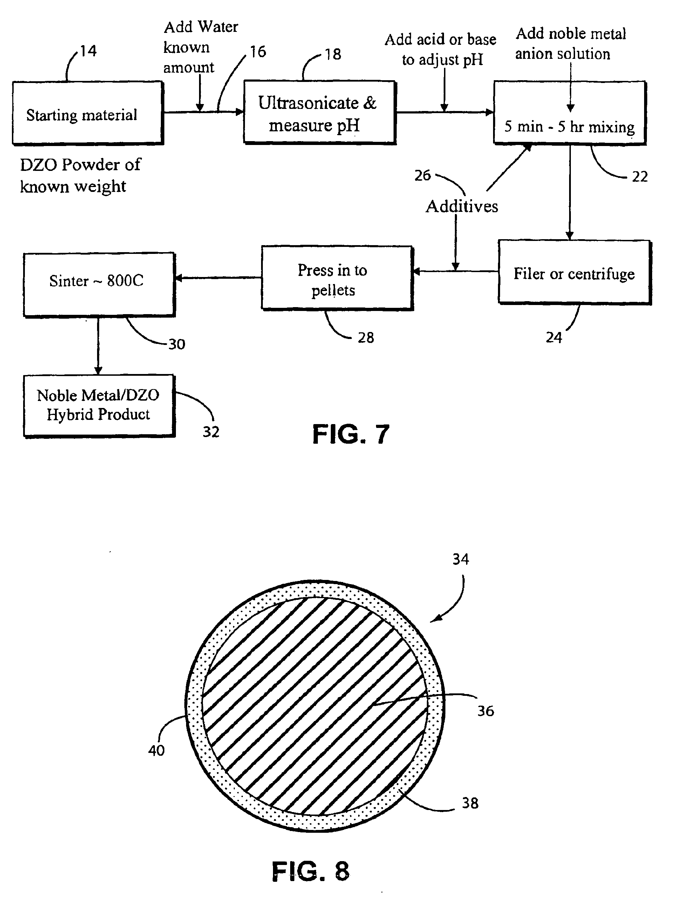

Figure 7 is a schematic of a typical process to produce a composite particle of the invention. Starting material from supply 14 is mixed with water at 16 and the resulting aqueous suspension is fed to a well stirred or an ultrasonication bath 18. Ultrasonication may be necessary if the DZO particles are agglomerated. The suspension is subjected to ultrasonication using conventional ultrasonics apparatus, if necessary, to reduce the particles to the desired particle size range, typically micron (1 to 10 microns) or submicron (0.1 to 1 micron) size entities. Preliminary studies have indicated that the zinc oxide/depleted zinc oxide particles in water have a surface positive charge. The present invention utilizes this property to create a strong interaction between the zinc-containing particles and anionic Pt containing species. The interaction is enhanced by utilizing stirring or ultrasonication to breakdown zinc-containing particles to micron or submicron size to increase the surface area and create maximum loading of noble metal onto the zinc containing material in the aqueous suspension. The pH of the well stirred or ultrasonicated aqueous suspension is measured at station 18 and adjusted in line 20 as it is fed to mixing station 22 where noble metal is added in the form of a noble metal anion solution , example a solution of Na₂Pt(OH)₆. Typically, a 50 ppb Pt solution at a pH of about 5.1 can be equilibrated with 0.5 g DZO having a surface area of 1 to 100 m²/g or more specifically 1 to 10 m²/g for 10 minutes to one hour with stirring. The mixture is stirred for a period of about 5 minutes to 5 hours, more usually about 10 minutes to 1 hour at the mixing station 22. After sufficient equilibration of zinc material and the noble metals in the optimized environment, the material is centrifuged, filtered or dried at 24 to obtain the composite product. The hybrid product is treated with additives 26 such as binders, sintering agents, etc., either at 22 or at 24, and then dried, pressed in to pellets at 28, calcined at a temperature of about 500°C, and then sintered at about 800°C at 30 for 4 to 8 hours to densify the final product obtained at 32.

Figure 8 shows a cross-section of a composite particle 34 according to the invention. The particle comprises a zinc-containing compound 36 and a noble metal 38. Typically, the zinc containing compound 36 is depleted zinc oxide. Depleted zinc oxide is zinc oxide depleted in the Zn-64 isotope to prevent activation of Zn-64 in the reactor to Zn-65 which is a gamma radiation emitter. The noble metal 38 is selected from platinum, rhodium, ruthenium, palladium, osmium and iridium, usually platinum.

The noble metal is present as a deposit 40 on the DZO particle, and is present as an anionic species, for example Pt(OH)₆²⁻, initially, but is converted to metallic Pt or oxide of Pt during the calcining process. The deposited noble metal may have a thickness of molecular dimensions since it is deposited from an ionic state for example from several angstroms to 1 micron and more specifically 5 to 1000 angstroms. The noble metal particle deposits may be continuous or discontinuous.

The composite particle normally has a size in the range of 0.1 to 50 microns, for example 1 to 20 microns.

Composite particle may further comprise a binder. A typical binder for this application include zinc stearate which acts as a binder as well as a solid lubricant. The amount of zinc stearate is 0.1 to 5% and more specifically in the range 0.5 to 1%.

Figure 9 shows schematically a modification of the apparatus of Figure 1 wherein two reservoirs a and b are provided for (a) supplying DZO pellets only and (b) for simultaneous injection of DZO and noble metal hybrid pellets. The components are otherwise the same as described above for Figure 1.

The composite noble metal/DZO hybrid product is used to simultaneously introduce both noble metal and DZO into the reactor feedwater. This approach eliminates the current practice of adding noble metal species into reactors during plant shutdown that requires prohibitively expensive critical path time. The process is passive whereby the noble metal and zinc containing hybrid product is loaded into a container (Figure 1) through which reactor feedwater is allowed to pass, thereby introducing both zinc and noble metal into the reactor in one operation.

While the invention has been described in connection with what is presently considered to be the most practical and preferred embodiment, it is to be understood that the invention is not to be limited to the disclosed embodiment.

As an example which does not form part of the present invention, instead of having an interaction between DZO and noble metal anion at low pH, it is also possible to have a strong interaction between the two species at high pH as well. However, in the latter case, it is necessary to use a noble metal cation such as Pt⁴⁺ and the anion has to be species such as nitrate, nitrite, hydroxide etc., that are acceptable in nuclear reactor water environment. In addition, the same approach can be used to add any metal other than a noble metal in to the reactor along with oxides other than DZO.

## Claims

1. A process for the preparation of a composite particle (34) comprising the step of contacting zinc containing particles with a pH adjusted noble metal (38) solution, wherein said zinc containing particles comprise zinc oxide or depleted zinc oxide; and wherein said noble metal (38) is in the form of an aqueous solution or suspension and the pH is maintained at between 5 and 6.

2. A process according to claim 1 wherein said noble metal (38) is platinum.

## Patentansprüche

1. Verfahren zum Herstellen eines Verbundteilchens (34), umfassend die Stufe des Kontaktierens von zinkhaltigen Teilchen mit einer Edelmetall (38)-Lösung, die einen eingestellten pH-Wert aufweist, worin die zinkhaltigen Teilchen Zinkoxid oder abgereichertes Zinkoxid umfassen und worin das Edelmetall (38) in der Form einer wässrigen Lösung oder Suspension vorliegt und der pH-Wert zwischen 5 und 6 gehalten wird.

2. Verfahren nach Anspruch 1, worin das Edelmetall (38) Platin ist.

## Revendications

1. Procédé de préparation d'une particule composite (34) comprenant l'étape consistant à mettre en contact des particules contenant du zinc avec une solution de métal noble à pH ajusté (38), dans lequel lesdites particules contenant du zinc comprennent de l'oxyde de zinc ou de l'oxyde de zinc appauvri; et dans lequel ledit métal noble (38) est sous la forme d'une solution ou suspension aqueuse et le pH est maintenu entre 5 et 6.

2. Procédé selon la revendication 1, dans lequel ledit métal noble (38) est le platine.
